# FASCICULE DE BREVET EUROPEEN

(11) **EP 0 831 166 B1**
(45) Date de publication et mention de la délivrance du brevet: **20.03.2002**
(21) Numéro de dépôt: 97420166.7
(22) Date de dépôt: 16.09.1997
(51) Int. Cl.: D06N 3/06, D06N 3/00, B29C 35/06

(54) **Procédé et installation de fabrication d'une structure composite, par exemple un revêtement de sol**
Herstellungsverfahren und -anlage für eine Verbundwerkstoffstruktur, zum Beispiel einen Bodenbelag
Manufacturing method and plant of a composite structure, such as a floor covering

(30) Priorité: 19.09.1996 FR 9611627
(43) Date de publication de la demande: 25.03.1998
(73) Titulaire: GERFLOR SA, 69100 Villeurbanne (FR)
(72) Inventeur: Berenger, Daniel, 26130 Saint-Paul-Trois-Chateaux (FR)
(74) Mandataire: Guerre, Dominique

(56) Documents cités:
- DE-B- 1 041 000
- FR-A- 2 314 837
- FR-A- 2 678 356
- GB-A- 1 325 314

## Description

La présente invention concerne la fabrication ou production de toute structure plastique composite, par exemple sous forme de feuille ou plaque, cette structure comprenant de manière générale, un voile textile résistant, conférant à la structure plastique sa cohésion et résistance, et au moins une couche d'une matière plastique, d'envers et/ou d'endroit, imprégnant le voile textile. Ce dernier comprend un ou des fils, ou des fibres, par exemple en verre, organisés et assemblés les uns par rapport aux autres, sous forme d'un tissu ou d'un non-tissé. La matière plastique, thermoformable, peut être toute matière plastique traditionnelle, telle que du polychlorure de vinyle, choisie et formulée selon la fonction de la couche de matière plastique, et/ou l'utilisation de la structure plastique composite.

A titre d'exemple non limitatif, la présente invention sera introduite, définie, décrite et explicitée par référence à la fabrication d'un revêtement de sol.

Il est connu de fabriquer des revêtements de sol par enduction, par tout procédé approprié selon lequel :
a) on dispose du voile textile résistant, par exemple d'un non-tissé de fibres de verre,
b) on prépare ou on dispose d'un plastisol, c'est-à-dire d'une dispersion de la matière plastique retenue, par exemple de polychlorure de vinyle, dispersée dans un milieu liquide comportant une fraction organique volatile, composée d'au moins un agent plastifiant traditionnel,
c) on enduit le voile textile avec une couche de plastisol, pour obtenir la couche de matière plastique, à l'état liquide ou pâteux, revêtissant et imprégnant au moins une partie du voile textile,
d) par combustion d'un gaz combustible, au contact d'une structure poreuse réfractaire, c'est-à-dire avec un ou plusieurs brûleurs à gaz et à infra-rouges, on obtient une surface radiante ou rayonnante,
e) on chauffe la couche de plastisol, avec la chaleur émise par la surface radiante, pour éliminer par vaporisation la fraction organique volatile, de la couche enduite, et gélifier le plastisol.

Pour ce faire, on connaît déjà une installation comprenant :
- un moyen d'enduction du voile textile avec la couche du plastisol,
- un moyen de transport du voile textile enduit avec la couche de plastisol, par exemple un tapis de convoyage,
- un four de gélification du plastisol, traversé d'une entrée à une sortie par le moyen de transport, comprenant les brûleurs à gaz radiants, disposés au dessus du moyen de transport, comportant chacun une structure poreuse réfractaire, à l'intérieur du four pour rayonner de la chaleur vers la couche de plastisol ; et un moyen de circulation d'un flux d'air est disposé pour faire circuler ce dernier à co-courant du voile textile enduit avec la couche de plastisol.

Avec des fours de gélification du plastisol, comportant des brûleurs à infra-rouges, on a observé une perte d'agents plastifiants importante, donc en quelque sorte évaporée dans le four, et donc une déplastification importante de la ou des couches de matière plastique, et par conséquent de la structure plastique composite, ou du revêtement de sol.

Cette déplastification nuit aux propriétés requises, notamment rend la matière plastique beaucoup moins flexible, voire cassante, ce qui est inacceptable pour un revêtement de sol.

La présente invention a donc pour objet de réduire la déplastification dans un four de gélification, mettant en oeuvre en particulier des brûleurs à gaz à infra-rouges.

De manière surprenante, et comme établi ci-après, on a découvert que l'utilisation de brûleurs catalytiques, en lieu et place de brûleurs radiants à infra-rouges traditionnels, permet de réduire de manière importante la déplastification de la matière plastique, notamment d'un revêtement de sol par exemple. Pour une formulation de départ comprenant 42 % (en poids de la matière plastique hors charge) d'agents plastifiants, la perte de ces derniers est ramenée à 3 ± 1 %, contre 7 % avec tout autre type de four de gélification, par exemple avec des brûleurs à gaz traditionnels, à infra-rouges.

Cette amélioration a deux conséquences essentielles :
- elle permet d'une part de travailler avec des formulations de la matière plastique, relativement plus chargées, et donc plus économiques,
- elle permet aussi d'obtenir des états de surface de matière plastique, beaucoup plus brillants, ce qui permet en particulier d'éviter toute mise en oeuvre d'un ou plusieurs vernis de surface.

S'agissant de l'état de surface, la brillance de surface, mesurée de manière traditionnelle, est améliorée jusqu'à une valeur de 50 %, au lieu de 20 à 30 %, telle qu'obtenue avec un four de gélification traditionnel.

De manière également inattendue, et lors de l'utilisation du revêtement de sol, la solution selon l'invention permet de limiter le jaunissement de la matière plastique. Par exemple, avec un four de gélification selon l'invention, l'indice de jaune mesuré selon les méthodes usuelles, est de 0,2 points d'indice de jaune, contre 0,7 lorsque le même revêtement de sol est obtenu avec un four de gélification traditionnel.

Ceci est tout à fait favorable, puisqu'en particulier on peut ainsi limiter l'ajout de métaux lourds (plomb, étain, baryum) pour stabiliser la formulation de la matière plastique.

Pour terminer, le recours à des brûleurs catalytiques permet, toutes choses égales par ailleurs, de limiter la longueur du four de gélification. En particulier, couplé avec un four de préchauffage, une longueur de 8 à 15 mètres est suffisante pour la gélification totale du plastisol ; cette longueur est à comparer aux 40 mètres des fours usuels de gélification, requis pour le même résultat. Cette diminution de la longueur du four de gélification permet de maintenir dans ce dernier une température régulière et homogène, qui à son tour permet d'assurer une grande régularité et homogénéité de la matière plastique, y compris lorsqu'elle est moulée, et ceci aussi bien dans le sens longitudinal que transversal de la structure plastique composite, ou revêtement de sol.

Cette longueur relativement faible permet aussi de conduire et contrôler beaucoup plus facilement le four de gélification, en limitant le métrage de la matière plastique, entre l'endroit de la mesure d'une valeur de consigne, par exemple une épaisseur, et l'endroit de dépose du plastisol à l'état liquide ou pâteux. Il s'ensuit une plus grande régularité de la qualité de la matière plastique et de la structure plastique composite finie, en limitant les pertes de matière en cas de dysfonctionnement du four de gélification.

A titre d'exemple, dans un four usuel de gélification, il est fréquent d'obtenir des écarts de plus ou moins 3/10ème de mm, selon les directions transversale et longitudinale du revêtement de sol. Avec un four selon l'invention, c'est-à-dire comportant des brûleurs catalytiques, on a pu mesurer des écarts qui ne dépassent pas 1/10ème de mm. Lorsque la structure plastique composite doit être découpée, par exemple en dalles de revêtement de sol, l'invention permet donc de limiter les rebuts, consécutifs aux variations d'épaisseur dans les directions transversale et longitudinale du revêtement de sol.

Par conséquent, en termes de procédé, la présente invention se caractérise par le fait que la combustion du gaz combustible est faite sous régime catalytique, sans flamme. Et en termes d'installation, la présente invention se caractérise en ce que la structure poreuse réfractaire de chaque brûleur radiant du four de gélification supporte un catalyseur de combustion, moyennant quoi chaquedit brûleur est un brûleur catalytique.

Les matières plastiques pouvant être mises en oeuvre selon l'invention, sont à titre d'exemple des polychorures de vinyle.

Par polychlorure de vinyle, on entend tout polymère contenant au moins 50% en poids du reste de la polymérisation de chlorure de vinyle et d'un comonomère vinylique, par exemple le chlorure de vinylidène, l'acétate de vinyle, l'éthylène, le propylène. Les polychlorures de vinyle considérés par la présente invention peuvent être en suspension, microsuspension, ou émulsion, et leur Kwert est compris entre 55 et 85.

Par agent plastifiant, on entend toute matière ou additif, conférant une plasticité à la matière plastique, tel qu'un phtalate, un benzoate, un trimellitate, un diester d'un acide aliphatique, un citrate, ou encore un polymère du type polyester ou epoxyde.

Deux types de brûleur catalytique peuvent être mis en oeuvre selon l'invention, à savoir :
- soit un brûleur catalytique à air primaire, moyennant quoi le gaz combustible et l'air primaire sont mélangés avant combustion au contact du catalyseur,
- soit un brûleur catalytique à air secondaire, moyennant quoi le gaz combustible traverse la structure poreuse réfractaire sans adjonction d'air primaire.

La présente invention est maintenant décrite par référence au dessin annexé, dans lequel :
- la Figure 1 représente de manière schématique une vue en coupe longitudinale d'une partie d'une installation de production d'une structure plastique composite, plane, par exemple d'un lé d'un revêtement de sol,
- la Figure 2 représente une vue de dessus de l'installation représentée à la Figure 1.

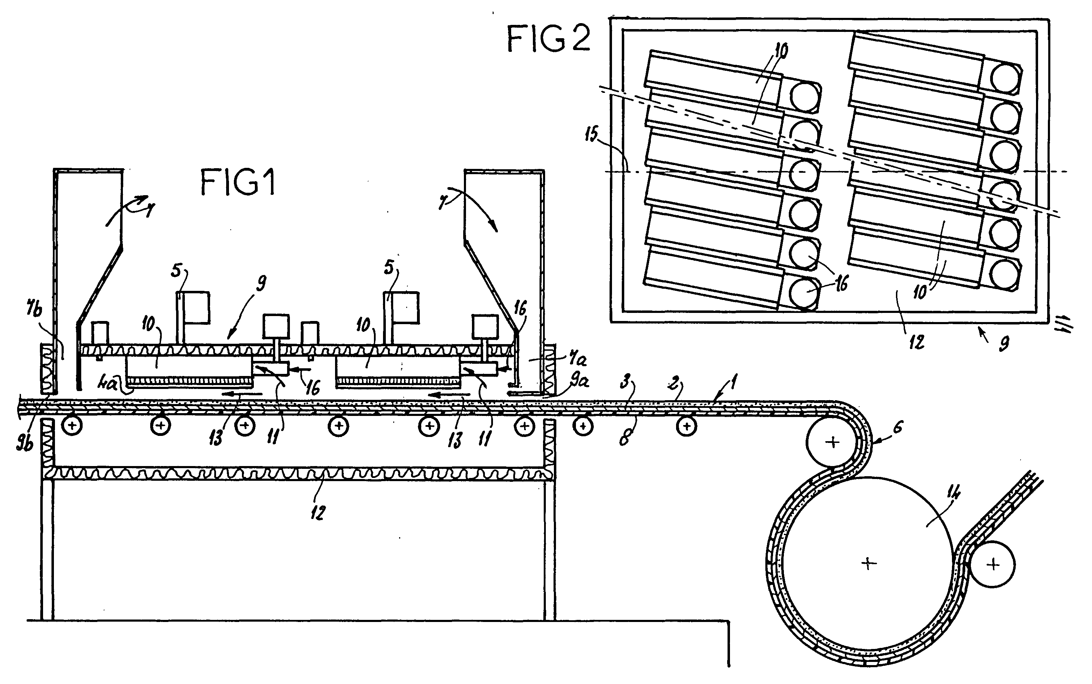

Avec l'installation représentée aux Figures 1 et 2, on fabrique un revêtement de sol 1, c'est-à-dire une structure plastique composite plane, sous forme de lé, comprenant un voile textile 2 résistant, en l'occurrence un non-tissé de fibres de verre, et une couche 3 d'endroit d'une matière plastique, en l'occurrence un polychlorure de vinyle, imprégnant le voile textile. Conformément à la représentation des Figures 1 et 2, les épaisseurs respectives du voile textile 2 et de la couche 3 de matière plastique ont été volontairement et relativement exagérées, dans un souci d'explication.

L'installation représentée aux Figures 1 et 2, comprend :
- un moyen d'enduction non représenté, du voile textile 2 avec une couche 6 d'un plastisol, c'est-à-dire d'une pâte ou d'un liquide comprenant la matière plastique dispersée dans un milieu liquide comportant lui-même une fraction organique volatile composée par au moins l'agent plastifiant,
- un moyen 8 de transport, par exemple à plat, du voile textile 2 enduit avec la couche 6 de plastisol, par exemple un système de rouleaux porteurs, assurant le convoyage à plat du voile textile 2, enduit avec le plastisol,
- un tambour 14 de préchauffage du voile textile 2 enduit avec la couche 6 de plastisol,
- un four 9 de gélification du plastisol, isolé thermiquement, traversé d'une entrée 9a à une sortie 9b par le moyen 8 de transport à plat.

Le four 9 comprend des brûleurs radiants et catalytiques 10. Chaque brûleur 10 comporte un boîtier délimitant une chambre de distribution du gaz combustible, mélangé éventuellement à de l'air primaire, et une structure 4 poreuse, préférentiellement réfractaire, supportant le catalyseur de combustion, par exemple une galette de silice, ayant par exemple une structure en nid d'abeille, ou encore un tissu réfractaire perméable aux gaz. Les brûleurs 10 sont disposés à l'intérieur du four 9 pour rayonner de la chaleur vers la couche 6 de plastisol, et sont agencés au dessus du moyen 8 de transport, pour orienter la surface radiante 4a de chacun, selon un angle aigu par rapport à un plan 15 longitudinal du four de gélification (Cf Figure 2).

Comme représenté à la Figure 1, chaque brûleur 10 radiant est un brûleur catalytique à air primaire, ou un brûleur catalytique à air secondaire. Dans le premier cas, le gaz combustible 5 est mélangé dans chaque brûleur 10 à de l'air primaire 11, grâce à une turbine auxiliaire, avant combustion au contact du catalyseur ; dans ce cas, l'air primaire peut être prélevé à l'extérieur du four 9 de gélification, ou à l'intérieur de ce dernier, comme représenté à la Figure 1, moyennant quoi au moins une partie 16 de la fraction organique volatile vaporisée est mélangée au gaz combustible, et brûlée avec ce dernier dans le brûleur catalytique. Dans le second cas, le gaz combustible 5 traverse la structure poreuse 4, sans adjonction d'air primaire, et la combustion se produit à la sortie de la structure 4, au contact de l'air ambiant mélangé à la fraction organique volatile vaporisée.

Des moyens sont prévus pour faire circuler un flux d'air 7, à co-courant du voile textile 2 enduit avec la couche 6 de plastisol, c'est-à-dire dans la même direction et le même sens de circulation que le voile 2. Ce flux d'air 7 est préalablement chauffé, avant son introduction dans le four 9, et évacué avec la fraction organique volatile vaporisée, résiduelle, à une température plus élevée que la température d'introduction.

Comme représenté aux Figures 1 et 2, le four 9 comporte un caisson 12, substantiellement isolé de l'extérieur, dans lequel sont disposés les brûleurs 10 radiants et catalytiques, avec une entrée 7a et une sortie 7b pour le flux d'air 7 circulant à co-courant du moyen 8 de transport. Des moyens 13 de convection forcée de l'air présent dans le caisson assurent un contact de ce dernier successivement avec la couche 6 de plastisol en cours de gélification, et la surface radiante 4a des brûleurs radiants 10. Ceci permet en particulier d'amener au moins une partie de la fraction organique volatile, vaporisée, au contact de la surface radiante 4a de chaque brûleur 10.

A titre d'exemple, un four de gélification tel que précédemment décrit comporte deux rangées de treize brûleurs, ayant au total une puissance thermique de 350 kW. Chaque brûleur 4 présente un angle de 17 ± 6° et de préférence de 17 ± 1°, par rapport à un plan longitudinal 15 du four 9. Le respect de cet angle permet d'assurer une répartition homogène de la puissance de chauffe. Et le flux d'air 7 est de l'ordre de 10 000 Nm³/h air chauffé à 175 ± 20°C.

Avec l'installation précédemment décrite, le procédé mis en oeuvre est le suivant :
a) on dispose du voile textile 2 résistant
b) on dispose du plastisol
c) on enduit le voile textile 2 avec la couche 6 de plastisol, pour obtenir une couche de matière plastique, à l'état liquide ou pâteux,
d) par combustion catalytique du gaz combustible 5, et d'au moins une partie de la fraction organique volatile vaporisée, on chauffe la couche 6 de plastisol pour éliminer la fraction organique volatile de la couche enduite et gélifier le plastisol.

De manière particulière, le plastisol est moussé, par voie chimique ou mécanique, lors de sa gélification.

Pendant la gélification, on fait circuler à co-courant du voile textile 2, enduit avec la couche 6 de plastisol, le flux d'air 7 préalablement chauffé.

Différents exemples sont maintenant décrits, à partir des formulations explicitées dans le tableau 1.

Dans ce tableau, les compositions sont indiquées en partie en poids.

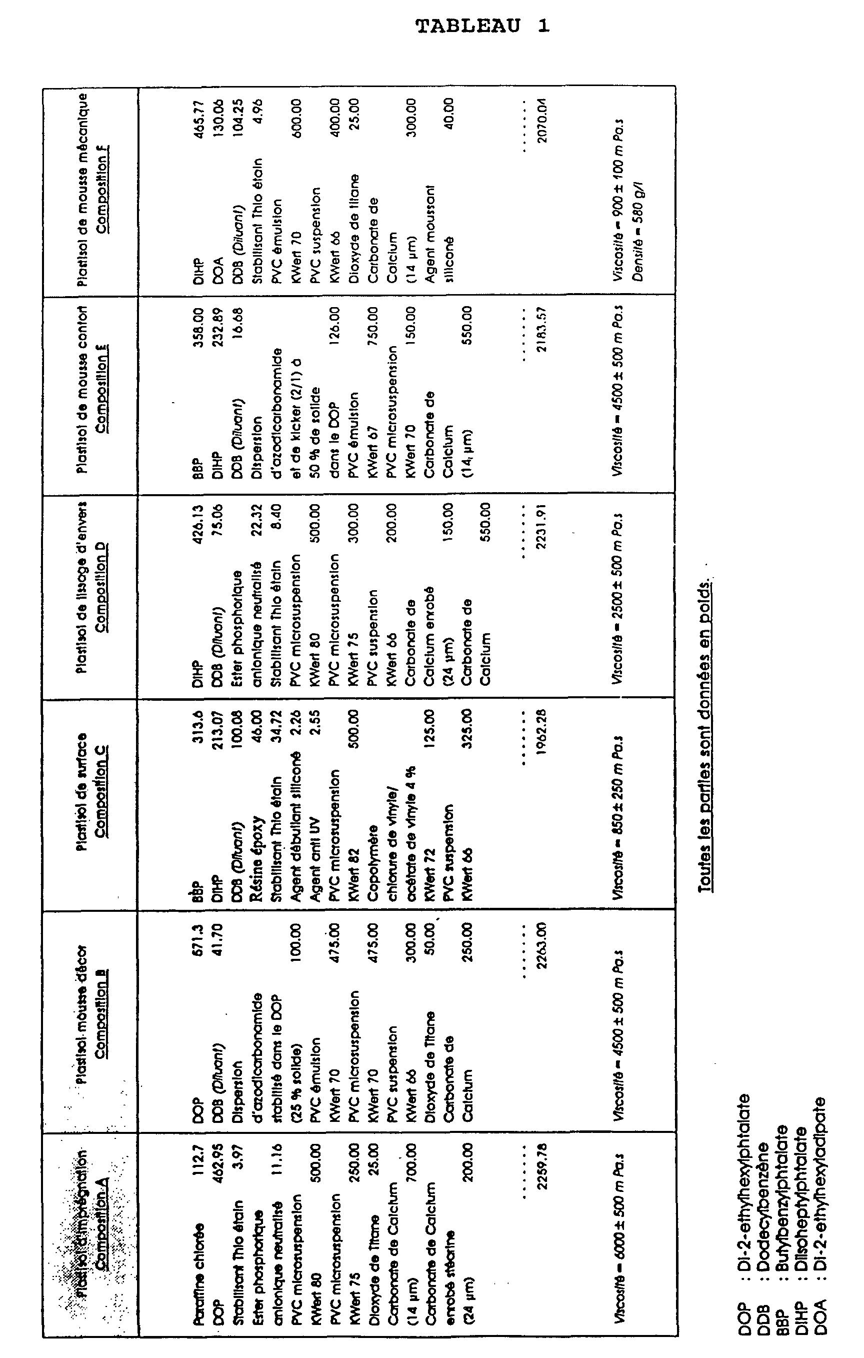

### Exemple 1 :

On réalise l'imprégnation du voile de verre avec un plastisol d'imprégnation, de composition A, qui est gélifié de manière conventionnelle, c'est-à-dire sans avoir recours au brûleur catalytique selon l'invention. On dépose ensuite, au moyen d'un rouleau enducteur un plastisol mousse de décor, de composition B, à raison de 255 g/m², qui est pré-gélifié. Cette couche de décor est ensuite imprimée. On enduit ensuite la surface, à raison de 230 g/m² avec un plastisol de surface de composition C. L'ensemble est préchauffé sur le tambour 14 à 165°C, puis est expansé et gélifié dans le four 9. La température d'introduction de l'air 7 est de 190 ± 5°C. La température atteinte par le moyen de transport 8, dans la zone d'entrée du four 9 est de 175 ± 5°C, et dans la zone de sortie de 215 ± 5°C. La vitesse de défilement du voile textile 2 revêtu du plastisol 6 est de 10 m/mn. L'épaisseur de la couche de plastisol 6, avant expansion, est de 91/100 mm, et après expansion de 121/100 mm. La teneur en fraction organique volatile à la sortie 7b du four de gélification 9, est de 1,2 g/Nm³.

L'indice de jaune, mesuré sur l'axe bleu jaune (-1 pour le bleu, +1 pour le jaune) dans le référentiel normalisé CIE L,a,b, au moyen d'un spectrocolorimètre, est de 0,2 points, contre 0,7 points dans un four conventionnel de gélification. L'allongement du revêtement de sol est de 80 %, contre 40 %, quand il est gélifié dans un four conventionnel.

### Exemple 2 :

On part du produit semi-ouvré obtenu selon l'Exemple 1.

On applique ensuite sur l'envers du voile de verre un plastisol de lissage, selon une composition D, à raison de 300 g/m². Puis on procède à la gélification de l'ensemble, dans le four 9.

La température de l'air 7 introduit est de 170 ± 5°C. La température du moyen 8 de transport est de 150 ± 5°C dans la zone d'entrée, et de 160 ± 5°C dans la zone de sortie. La vitesse de défilement du moyen 8 est de 20 m/mn. L'épaisseur de la couche d'envers déposée est de 1,3 mm.

La couche d'envers gélifiée présente un bel aspect, est bien homogène avec de bonnes caractéristiques mécaniques. L'indice de jaune mesuré comme précédemment est inférieur à 0,2 points.

### Exemple 3 :

On part du produit semi-ouvré obtenu selon l'exemple 1.

Puis un plastisol mousse de confort, selon la composition E, est appliqué avec la racle, à raison de 395 g/m².

La température de l'air d'entrée 7 est de 195 ± 5°C. La température du moyen 8 de transport est de 174 ± 4°C dans la zone d'entrée, et de 203 ± 3°C dans la zone de sortie. La vitesse de défilement du moyen 8 est de 8 m/mn. L'épaisseur du plastisol mousse déposé est de 1,33 mm, après gélification. L'écart, par rapport à cette épaisseur moyenne ne dépasse pas 0,1 mm dans les directions longitudinale et transversale. L'indice de jaune mesuré comme précédemment est inférieur à 0,2 points.

Les valeurs d'allongement mesurées sur le revêtement de sol sont de 70 ± 10 %, contre 35 ± 10 % lorsque le plastisol mousse est expansé dans un four conventionnel de gélification.

### Exemple 4 :

On part du produit semi-ouvré obtenu selon l'exemple 1.

Puis un plastisol moussé mécaniquement, ayant la composition F est appliqué à la racle à raison de 870 g/m². Par "mousse mécanique", on entend toute mousse obtenue par des moyens mécaniques, par exemple par agitation, c'est-à-dire sans adjonction d'agents chimiques moussants. Puis l'ensemble est gélifié dans le four 9, avec une température de l'air 7 entrant de 190 ± 5°C. La température du moyen 8 est de 175 ± 5°C dans la zone d'entrée, et de 195 ± 5°C dans la zone de sortie. La vitesse de défilement du moyen 8 est de 6,5 m/mn. L'épaisseur de la matière plastique déposée est de 1,50 mm. L'écart par rapport à cette épaisseur moyenne ne dépasse 0,08 mm, dans les directions longitudinale et transversale.

## Revendications

1. Procédé de fabrication d'une structure plastique composite (1), plane, par exemple d'un revêtement de sol, comprenant un voile textile (2) résistant, comprenant un ou des fils, ou des fibres, par exemple en verre, et au moins une couche (3) d'une matière plastique, par exemple un polychlorure de vinyle, d'envers ou d'endroit, imprégnant le voile textile, procédé selon lequel :
a) on dispose du voile textile (2) résistant,
b) on dispose d'un plastisol comprenant la matière plastique dispersée dans un milieu liquide comportant une fraction organique volatile, composée d'au moins un agent plastifiant,
c) on enduit le voile textile (2) avec au moins une couche (6) de plastisol, pour obtenir la couche de matière plastique, à l'état liquide ou pâteux,
d) par combustion d'un gaz combustible (5) au contact d'une structure poreuse (4), on obtient une surface radiante (4a),
e) on chauffe la couche (6) de plastisol avec la surface radiante (4a), pour éliminer la fraction organique volatile de la couche enduite et gélifier le plastisol,
**caractérisé en ce que** la combustion du gaz combustible est faite sous régime catalytique, sans flamme.

2. Procédé selon la revendication 1, **caractérisé en ce que** lors de la gélification le plastisol est moussé, par voie chimique ou mécanique.

3. Procédé selon la revendication 1, **caractérisé en ce que** au cours du chauffage de la couche (6) de plastisol, on fait circuler à co-courant du voile textile (2) enduit avec la couche (6) de plastisol, un flux d'air (7) préalablement chauffé.

4. Installation de fabrication d'une structure plastique composite (1), plane, par exemple d'un revêtement de sol, comprenant un voile textile (2) résistant, comprenant un ou des fils, ou des fibres, par exemple en verre, et au moins une couche (3) d'une matière plastique, par exemple un polychlorure de vinyle, d'envers ou d'endroit, imprégnant le voile textile, ladite installation comprenant :
- un moyen d'enduction du voile textile (2) avec une couche (6) d'un plastisol, comprenant la matière plastique dispersée dans un milieu liquide comportant une fraction organique volatile composée d'au moins un agent plastifiant,
- un moyen (8) de transport du voile textile (2) enduit avec la couche (6) de plastisol,
- un four (9) de gélification du plastisol, traversé d'une entrée (9a) à une sortie (9b) par le moyen (8) de transport, comprenant des brûleurs (10) radiants, comportant chacun une structure (4) poreuse, disposés à l'intérieur dudit four pour rayonner de la chaleur vers la couche (6) de plastisol, et un moyen de circulation d'un flux d'air (7), à co-courant du voile textile (2) enduit avec la couche (6) de plastisol,
**caractérisée en ce que** la structure poreuse (4) réfractaire de chaque brûleur radiant (10) du four (9) de gélification supporte un catalyseur de combustion, moyennant quoi chaquedit brûleur (10) est un brûleur catalytique, sans flamme.

5. Installation selon la revendication 4, **caractérisée en ce que** chaque brûleur (10) radiant est un brûleur catalytique à air primaire, moyennant quoi le gaz combustible et de l'air primaire (11) sont mélangés avant combustion au contact du catalyseur.

6. Installation selon la revendication 4, **caractérisée en ce que** chaque brûleur radiant (10) est un brûleur catalytique à air secondaire, moyennant quoi le gaz combustible traverse la structure poreuse (4) réfractaire, sans adjonction d'air primaire.

7. Installation selon la revendication 4, **caractérisée en ce que** le four (9) de gélification comporte un caisson (12), substantiellement isolé de l'extérieur, dans lequel sont disposés les brûleurs (10) radiants, avec une entrée (7a) et une sortie (7b) pour le flux d'air (7) circulant à co-courant du moyen (8) de transport, et des moyens (13) de convection forcée de l'air présent dans le caisson, successivement au contact de la couche (6) plastisol et de la surface radiante (4a) des brûleurs radiants (10).

8. Installation selon la revendication 4, **caractérisée en ce qu'**elle comprend un tambour (14) de préchauffage du voile textile (2) enduit avec la couche (6) de plastisol.

9. Installation selon la revendication 4, **caractérisée en ce que** les brûleurs radiants (10) sont agencés pour orienter la surface radiante (4a) de chacun, selon un angle aigu par rapport à un plan (15) longitudinal du four (9) de gélification.

10. Utilisation d'un ou plusieurs brûleurs radiants catalytiques (10) pour la gélification d'un plastisol imprégnant un voile textile, ledit plastisol comprenant une matière plastique dispersée dans un milieu liquide comportant une fraction organique volatile, composée d'au moins un agent plastifiant.

## Patentansprüche

1. Verfahren zum Herstellen einer ebenen Kunststoff-Verbundstruktur (1), bspw. einem Bodenbelag, die eine widerstandsfähige textile Lage (2) aufweist, welche einen oder mehrere Fäden oder Fasern, bspw. aus Glas, enthält, und zumindest eine Schicht (3) eines Kunststoffmaterials, bspw. Polyvinylchlorid, und zwar rückseitig oder vorderseitig, das die textile Lage imprägniert, wobei das Verfahren folgende Schritte aufweist, nämlich
a) Bereitstellen einer widerstandsfähigen textilen Lage (2),
b) Bereitstellen eines Plastisols, das das Kunststoffmaterial in einem flüssigen Milieu dispergiert enthält, welches eine verdampfbare organische Fraktion enthält, die zumindest ein plastifizierendes Agens aufweist,
c) Bedecken der textilen Lage (2) mit zumindest einer Schicht (6) des Plastisols, um die Schicht an Kunststoffmaterial in flüssigem oder pastösem Zustand zu erhalten,
d) durch Verbrennen eines brennbaren Gases (5) in Kontakt mit einer porösen Struktur (4) erhält man eine strahlende Oberfläche (4a),
e) Erwärmen der Schicht (6) an Plastisol mit der strahlenden Oberfläche (4a), um die verdampfbare organische Fraktion der bedeckenden Schicht zu entfernen und um das Plastisol zu gelifizieren,
**dadurch gekennzeichnet, daß** die Verbrennung des brennbaren Gases unter katalytischen Bedingungen, ohne Flamme durchgeführt wird.

2. Verfahren nach Anspruch 1, **dadurch gekennzeichnet, daß** bei der Gelifizierung das Plastisol aufgeschäumt wird, sei es auf chemischem oder auf mechanischem Wege.

3. Verfahren nach Anspruch 1, **dadurch gekennzeichnet, daß** während des Erwärmens der Schicht (6) an Plastisol man einen Strom an zuvor erwärmter Luft (7) in gleicher Richtung wie die textile Lage (2), die mit der Schicht (6) an Plastisol bedeckt ist, zirkulieren läßt.

4. Vorrichtung zum Herstellen einer ebenen Kunststoff-Verbundstruktur (1), bspw. einem Bodenbelag, die eine widerstandsfähige textile Lage (2) aufweist, welche einen oder mehrere Fäden oder Fasern, bspw. aus Glas, enthält, und zumindest eine Schicht (3) eines Kunststoffmaterials, bspw. Polyvinylchlorid, sei es rückseitig oder vorderseitig, das die textile Lage imprägniert, wobei die Vorrichtung folgendes aufweist, nämlich
- Mittel zum Bedecken der textilen Lage (2) mit einer Schicht (6) eines Plastisols, das das Kunststoffmaterial in einem flüssigen Milieu dispergiert enthält, welches eine verdampfbare organische Fraktion enthält, die zumindest ein plastifizierendes Agens aufweist,
- Mittel (8) zum Transportieren der textilen Lage (2), die mit der Schicht (6) an Plastisol bedeckt ist,
- einen Ofen (9) zum Gelifizieren des Plastisols der von einem Einlaß (9a) bis zu einem Auslaß (9b) durch die Mittel (8) zum Transportieren durchquert wird, welcher strahlende Brenner (10) aufweist, die jeweils eine poröse Struktur (4) aufweisen, welche im Inneren des Ofens angeordnet sind, um Wärme auf die Schicht (6) an Plastisol abzustrahlen, und der Mittel zum Zirkulieren eines Luftstromes (7) aufweist, und zwar gleichlaufend mit der textilen Lage (2), die mit der Schicht (6) an Plastisol bedeckt ist,
**dadurch gekennzeichnet, daß** die feuerfeste poröse Struktur (4) jedes strahlenden Brenners (10) des Ofens (9) zur Gelifizierung einen Verbrennungs-Katalysator trägt, wodurch jeder Brenner (10) ein katalytischer Brenner ohne Flamme ist.

5. Vorrichtung nach Anspruch 4, **dadurch gekennzeichnet, daß** jeder strahlende Brenner (10) ein katalytischer Brenner mit Primärluft ist, durch den das brennbare Gas und die Primärluft (11) vor der Verbrennung in Kontakt mit dem Katalysator vermischt werden.

6. Vorrichtung nach Anspruch 4, **dadurch gekennzeichnet, daß** jeder strahlende Brenner (10) ein katalytischer Brenner mit Sekundärluft ist, durch den das brennbare Gas die poröse feuerfeste Struktur (4) ohne die Hinzufügung von Primärluft durchquert.

7. Vorrichtung nach Anspruch 4, **dadurch gekennzeichnet, daß** der Ofen (9) zum Gelifizieren ein Gehäuse (12) aufweist, das im wesentlichen zur Außenseite hin isoliert ist, in welchem die strahlenden Brenner (10) angeordnet sind, wobei dieses einen Einlaß (7a) und einen Auslaß (7b) für den Luftstrom (7) aufweist, der gleichläufig mit dem Transportmittel (8) zirkuliert, und der ferner Mittel (13) zur forcierten Konvektion von in dem Gehäuse vorhandener Luft aufweist, welche aufeinanderfolgend in Kontakt mit der Schicht (6) an Plastisol und der strahlenden Oberfläche (4a) der strahlenden Brenner (10) steht.

8. Vorrichtung nach Anspruch 4, **dadurch gekennzeichnet, daß** diese eine Trommel (14) zum Vorwärmen der textilen Lage (2), die mit der Schicht (6) an Plastisol bedeckt ist, aufweist.

9. Vorrichtung nach Anspruch 4, **dadurch gekennzeichnet, daß** die strahlenden Brenner (10) derart ausgestaltet sind, daß die strahlende Oberfläche (4a) jedes dieser unter einem spitzen Winkel bezüglich einer längsverlaufenden Ebene (15) des Ofens (9) zum Gelifizieren ausgerichtet sind.

10. Verwendung von einem oder mehreren katalytischen strahlenden Brennern (10) zum Gelifizieren eines Plastisoles, das eine textile Lage imprägniert, wobei das Plastisol ein Kunststoffmaterial in einem flüssigen Milieu dispergiert aufweist, welches eine verdampfbare organische Fraktion enthält, die zumindest ein plastifizierendes Agens aufweist.

## Claims

1. Process for manufacturing a flat composite plastic structure (1), for example a floor covering, comprising a strong textile web (2), comprising one or more yarns or fibres, for example made of glass, and at least one layer (3) of a plastic, for example a polyvinyl chloride, on the reverse side or on the top side, which impregnates the textile web, according to which process:
a) the strong textile web (2) is made available,
b) a plastisol, comprising the plastic dispersed in a liquid medium containing a volatile organic fraction, composed of at least one plasticizing agent, is made available,
c) the textile web (2) is coated with at least one layer (6) of plastisol, in order to obtain the layer of plastic, in the liquid or pasty state,
d) a radiant surface (4a) is obtained by combustion of a combustible gas (5) in contact with a porous structure (4)
e) the layer (6) of plastisol is heated, using the radiant surface (4a), in order to remove the volatile organic fraction of the coated layer and to cause the plastisol to gel,
**characterized in that** the combustion of the combustible gas takes place under flameless, catalytic conditions.

2. Process according to Claim 1, **characterized in that**, during the gelling, the plastisol is foamed by chemical or mechanical means.

3. Process according to Claim 1, **characterized in that**, while the layer (6) of plastisol is being heated, a stream of preheated air (7) is made to flow in a co-current manner over the textile web (2) coated with the layer (6) of plastisol.

4. Plant for manufacturing a flat composite plastic structure (1), for example a floor covering, comprising a strong textile web (2), comprising one or more yarns or fibres, for example made of glass, and at least one layer (3) of a plastic, for example a polyvinyl chloride, on the reverse side or on the top side, which impregnates the textile web, the said plant comprising:
- a means for coating the textile web (2) with a layer (6) of a plastisol, comprising the plastic dispersed in a liquid medium containing a volatile organic fraction composed of at least one plasticizing agent,
- a means (8) for transporting the textile web (2) coated with the layer (6) of plastisol,
- an oven (9) for gelling the plastisol, through which the transporting means (8) pass from an inlet (9a) to an outlet (9b), the oven comprising radiant burners (10), each having a porous structure (4), which are arranged inside the said oven in order to radiate heat towards the layer (6) of plastisol, and a means for causing a stream of air (7) to flow in a co-current manner over the textile web (2) coated with the layer (6) of plastisol,
**characterized in that** the refractory porous structure (4) of each radiant burner (10) of the gelling oven (9) supports a combustion catalyst, by means of which each said burner (10) is a flameless, catalytic burner.

5. Plant according to Claim 4, **characterized in that** each radiant burner (10) is a primary-air catalytic burner by means of which the combustible gas and primary air (11) are mixed before combustion in contact with the catalyst.

6. Plant according to Claim 4, **characterized in that** each radiant burner (10) is a secondary-air catalytic burner by means of which the combustible gas passes through the refractory porous structure (4), without the addition of primary air.

7. Plant according to Claim 4, **characterized in that** the gelling oven (9) comprises a box (12), substantially isolated from the outside, in which the radiant burners (10) are arranged, with an inlet (7a) and an outlet (7b) for the stream of air (7) flowing in a co-current manner over the transporting means (8), and means (13) for the forced convection of the air present in the box, which ensure contact of this air successively with the plastisol layer (6) and with the radiant surface (4a) of the radiant burners (10).

8. Plant according to Claim 4, **characterized in that** it comprises a drum (14) for preheating the textile web (2) coated with the layer (6) of plastisol.

9. Plant according to Claim 4, **characterized in that** the radiant burners (10) are arranged so that the radiant surface (4a) of each is oriented at an acute angle with respect to a longitudinal plane (15) of the gelling oven (9).

10. Use of one or more catalytic radiant burners (10) for gelling a plastisol which impregnates a textile web, the said plastisol comprising a plastic dispersed in a liquid medium containing a volatile organic fraction, composed of at least one plasticizing agent.
